# EUROPEAN PATENT APPLICATION

(11) **EP 3 346 477 A1**
(43) Date of publication of application: **11.07.2018**
(21) Application number: 17209440.1
(22) Date of filing: 21.12.2017
(51) Int. Cl.: H01F 38/12, H01F 27/02, H01F 27/32, H01B 3/40

(54) **IGNITION COIL FOR INTERNAL COMBUSTION ENGINE**

(30) Priority: 29.12.2016 JP 2016257258
(71) Applicant: Hitachi Automotive Systems Hanshin, Ltd., Sanda-shi, Hyogo 669-1339 (JP)
(72) Inventor: KAMIKAWA, Masayuki, Tokyo, 100-8280 (JP); YASUDA, Yu, Hyogo, 669-1339 (JP); TSUYUNO, Nobutake, Tokyo, 100-8280 (JP); ISHII, Toshiaki, Tokyo, 100-8280 (JP)
(74) Representative: MERH-IP Matias Erny Reichl Hoffmann Patentanwälte PartG mbB

(57) **Abstract**

An ignition coil (1) for an internal combustion engine includes an iron core, a primary coil (3) disposed around the iron core, a secondary coil (5) disposed around the primary coil (3), and an insulating portion (10) sealing the iron core, the primary coil (3), and the secondary coil (5). The insulating portion (10) includes a resin and a linear aliphatic group-containing organic substance, and has a sea-island structure in which the organic substance is dispersed in a matrix of the resin.

## Description

### BACKGROUND OF THE INVENTION

### 1. Field of the Invention

The present invention relates to an ignition coil for supplying a high voltage to an ignition plug of an internal combustion engine.

### 2. Description of the Related Art

An ignition coil for an internal combustion engine is provided with a central iron core and a side iron core so as to surround the center iron core in a coil case. A primary coil connected to a battery is disposed on an outer periphery of the central iron core. A secondary coil connected to a plug is disposed on an outer periphery of the primary coil with a space. A side iron core is disposed on an outer periphery of the secondary coil with a space. An inside of the coil case is sealed with an insulating resin in order to ensure an insulation property between the primary coil and the secondary coil, between the secondary coil and the side iron core, or the like.

An ignition coil for an internal combustion engine, supplying a high voltage in order to generate spark discharge in an ignition plug of an internal combustion in an engine of a vehicle or the like is required to be reduced in size and increased in output due to enforcement of fuel efficiency regulation. That is, an ignition coil having high durability even at a high voltage is required.

JP 2005-2310 A discloses a resin composition used for an ignition coil, having two peaks in a particle size distribution curve of a filler dispersed in a thermosetting resin, and having a valley with a frequency lower than a peak of a small diameter between the two peaks. In JP 2005-2310 A, by introducing spherical small diameter particles into gaps between spherical large diameter particles, fluidity of the resin is improved, the resin is caused to easily permeate between coils, and insulation breakdown in an insulator is suppressed.

### SUMMARY OF THE INVENTION

Even in the resin composition described in JP 2005-2310 A, under a high voltage of 15 kV or more, a filler is spherical, and therefore a detour effect of an electric tree propagating along the filler does not work sufficiently, and the effect is limited.

In addition, in a case where a filler having a particle diameter of 0.7 to 3 µm with a small diameter peak, exemplified in JP 2005-2310 A is mixed with a resin, as compared with a case where a filler having a larger particle diameter is mixed, an increase in viscosity is large as compared with the addition amount. Therefore, when a filler to exhibit a sufficient insulation property is added, injection becomes difficult, or even if injection is possible, voids tend to be included, and the insulation property is deteriorated on the contrary disadvantageously. In addition, when the content of the filler having a small diameter is increased, the filler having a small diameter forms a barrier around an electric wire, which obstructs impregnation of the resin into the electric wire on the contrary disadvantageously.

The present invention has been achieved in view of the above conventional problems. An object of the present invention is to provide an ignition coil for an internal combustion engine, suppressing an increase in viscosity of a resin composition forming an insulating portion and generation of voids, improving an insulation property of the insulating portion and durability thereof, and coping with high output.

In order to solve the above problems, the ignition coil for an internal combustion engine according to the present invention includes an iron core, a primary coil disposed around the iron core, a secondary coil disposed around the primary coil, and an insulating portion sealing the iron core, the primary coil, and the secondary coil. The insulating portion includes a resin and a linear aliphatic group-containing organic substance, and has a sea-island structure in which the organic substance is dispersed in a matrix of the resin.

According to the present invention, an ignition coil for an internal combustion engine can suppress an increase in viscosity of a resin composition forming an insulating portion and generation of voids, can improve an insulation property of the insulating portion and durability thereof, and can cope with high output.

### BRIEF DESCRIPTION OF THE DRAWINGS

Fig. 1 is a top view illustrating an example of an ignition coil for an internal combustion engine of the present invention;
Fig. 2 is a cross-sectional view taken along the line A-A in Fig. 1;
Fig. 3 is a partially enlarged cross-sectional view illustrating an insulating portion of the ignition coil of the present invention; and
Fig. 4 is a partially enlarged cross-sectional view illustrating a modified example of the insulating portion of Fig. 3.

### DESCRIPTION OF THE PREFERRED EMBODIMENTS

Hereinafter, an embodiment of the present invention will be described with reference to the drawings.

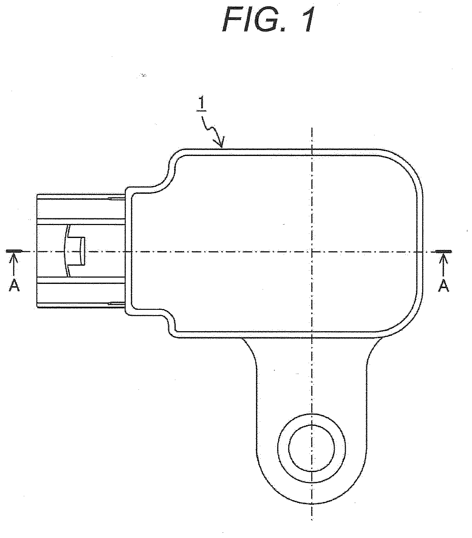

Fig. 1 illustrates an example of an ignition coil for an internal combustion engine.

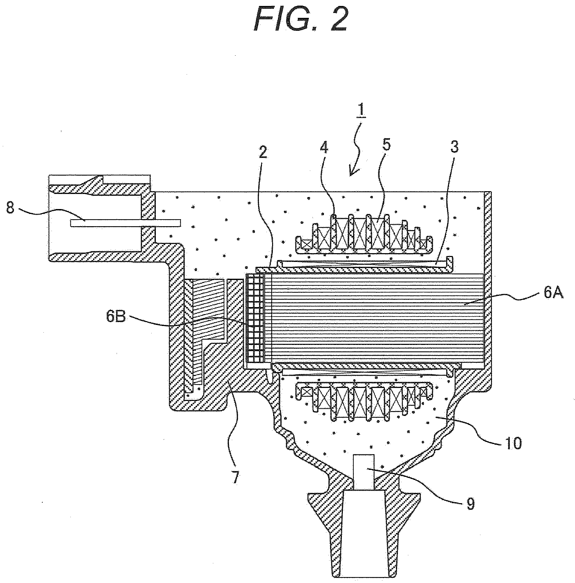

Fig. 2 is a cross-sectional view taken along the line A-A in Fig. 1.

In Fig. 1, an ignition coil 1 for an internal combustion engine is an independent ignition type, is mounted in a plug hole of each cylinder of an internal combustion engine, and is directly connected to an ignition plug.

As illustrated in Fig. 2, the ignition coil 1 for an internal combustion engine includes an iron core constituted by a central iron core portion 6A and a side iron core portion 6B. A magnetic circuit is constituted by this iron core. In addition, the ignition coil 1 includes a coil case 7, and a primary coil 3 and a secondary coil 5 housed in the coil case 7. In the coil case 7, an insulating portion 10 is formed, and seals the central iron core portion 6A, the side iron core portion 6B, the primary coil 3, and the secondary coil 5.

In Fig. 2, the primary coil 3 is constituted by a primary bobbin 2 for storing the central iron core portion 6A and an electric wire wound around the primary bobbin 2. The central iron core portion 6A forms a magnetic path forming a closed magnetic path by press-laminating silicon steel plates of 0.2 to 0.7 mm. The side iron core portion 6B is provided at one end portion of the central iron core portion 6A. A closed magnetic path is formed at an end portion of the side iron core portion 6B on the opposite side to the central iron core portion 6A.

An enameled wire having a wire diameter of about 0.3 to 1.0 mm is used for the electric wire of the primary coil 3. The primary coil 3 is formed by laminating and winding the electric wire on the primary bobbin 2 several tens of times per layer, about a hundred to three hundred times in total over several layers.

The secondary coil 5 is constituted by a secondary bobbin 4 disposed around the primary bobbin 2 and an electric wire wound around the secondary bobbin 4. The secondary bobbin 4 has a plurality of winding grooves and is formed of a thermoplastic synthetic resin. As the electric wire of the secondary coil 5, for example, an enameled wire having a wire diameter of about 0.01 to 0.1 mm is used. The secondary coil 5 is formed by split winding the enameled wire around the secondary bobbin 4 about 5,000 to 30,000 times in total.

In addition, a permanent magnet magnetized in the opposite direction to a direction in which the central iron core portion 6A is excited by energization of the primary coil 3 may be inserted between the other end portion of the central iron core portion 6A and the side iron core portion 6B.

Electric power supplied to the primary coil 3 is supplied via a terminal 8. A connector is connected to the terminal 8. Meanwhile, a high voltage terminal 9 is connected to the secondary coil 5. In the secondary coil 5, a high voltage for generating spark discharge in the ignition plug is induced by energization of the primary coil 3. The high voltage induced in the secondary coil 5 is supplied to the ignition plug via the high voltage terminal 9. The high voltage induced in the secondary coil 5 is supplied to the ignition plug, and the ignition plug generates spark discharge.

The insulating portion 10 is formed by injecting a resin composition containing a thermosetting resin before curing into a void portion of the coil case 7 housing the primary coil 3 and the secondary coil 5 and curing the resin composition. Therefore, a gap around the primary coil 3 wound around the primary bobbin 2 and the secondary coil 5 wound around the secondary bobbin 4 is filled with an insulating material constituting the insulating portion 10. As a result, insulation between the primary coil 3 and the secondary coil 5 is maintained. That is, in the coil case 7, the primary coil 3, the secondary coil 5, the primary bobbin 2, and the secondary bobbin 4 are insulated and fixed by the insulating material.

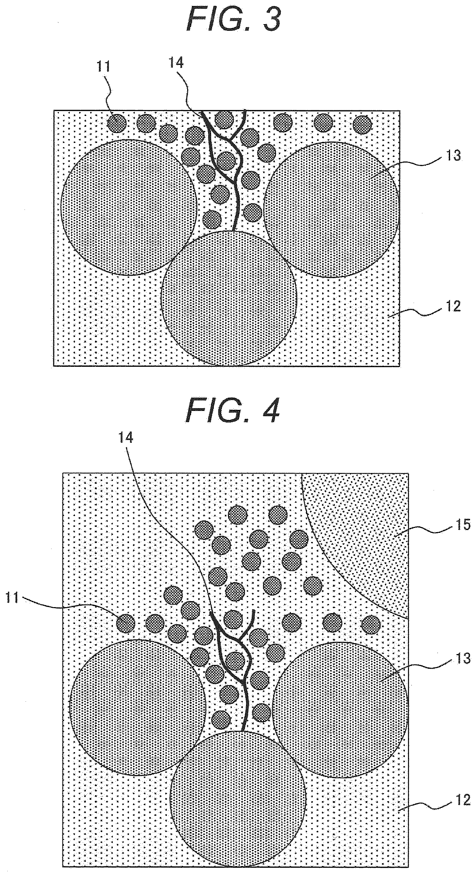

Fig. 3 schematically illustrates a microstructure of an electric wire of an ignition coil according to an embodiment of the present invention, and a periphery thereof.

In Fig. 3, the periphery of a secondary electric wire 13 is covered with the insulating material. The insulating material is constituted by an epoxy resin 12 and a linear aliphatic group-containing organic substance 11. The epoxy resin 12 is an epoxy resin (cured product) crosslinked with an acid anhydride. In addition, the insulating material may further contain an inorganic filler. Therefore, a sea-island structure in which the organic substance 11 is dispersed in a matrix of the epoxy resin 12 is formed around the secondary electric wire 13. The linear aliphatic group-containing organic substance 11 is easily dispersed in a particulate shape. The shape of the dispersed organic substance 11 may be spherical or elongated.

As a specific example of dimensions thereof, a wire diameter of the secondary electric wire 13 is 0.01 to 0.1 mm, and a particle diameter of the linear aliphatic group-containing organic substance 11 is 5 to 100 nm.

Note that the microstructure of the insulating material can be confirmed by a scanning probe microscope (SPM).

As illustrated in Fig. 3, in a case where an electric tree 14 is generated, a current is generated from the secondary electric wire 13 having a narrow wire diameter and easily passes through an inside of the epoxy resin 12.

The particle diameter of the organic substance 11 constituting the sea-island structure is smaller than a diameter of the secondary electric wire 13. Therefore, particles of the organic substance 11 are easily inserted between the secondary electric wires 13. The linear aliphatic group-containing organic substance 11 has a different dielectric constant from the epoxy resin 12, and therefore alleviates an electric field generated from the secondary electric wire 13 due to existence thereof in the vicinity of the secondary electric wire 13. This can suppress generation of the electric tree 14. Therefore, an insulation property can be improved using such an insulating material.

As described above, by using an insulating material in which a sea-island structure is formed by the linear aliphatic group-containing organic substance 11 and the epoxy resin 12, an ignition coil for an internal combustion engine, having high durability even at a high voltage can be provided.

As the insulating material, for example, a main agent containing an epoxy resin, a curing agent containing an acid anhydride, a cured product of an epoxy resin composition, an inorganic substance filler (inorganic filler), and a linear aliphatic group-containing organic substance can be used.

Fig. 4 illustrates a modified example of the insulating portion of Fig. 3.

In Fig. 4, an inorganic filler 15 is mixed with an insulating material constituting an insulating portion. The particle diameter of the inorganic filler 15 is preferably 1 to 50 µm. In order to prevent viscosity from increasing at the time of filling the insulating material before curing, the particle diameter of the inorganic filler 15 is more preferably 10 to 50 µm.

As the above epoxy resin, a conventionally known epoxy resin can be used. Examples of the epoxy resin include a bisphenol type epoxy resin and a novolak type epoxy resin which are aromatic epoxy resins. Examples of the bisphenol type epoxy resin include a bisphenol A type epoxy resin, a bisphenol AD type epoxy resin, and a bisphenol F type epoxy resin. Examples of the novolac type epoxy resin include a phenol novolak type epoxy resin and a cresol novolak type epoxy resin. An alicyclic epoxy resin may be used. Among these resins, a bisphenol type epoxy resin easily handled because of low volatility and low viscosity is preferably used, and a bisphenol A type epoxy resin is particularly preferable.

Examples of the acid anhydride used for the epoxy resin composition for forming the insulating material include phthalic anhydride, trimellitic anhydride, pyromellitic anhydride, benzophenonetetracarboxylic anhydride, ethylene glycol bisanhydrotrimellitate, glycerol trisanhydrotrimellitate, methyltetrahydrophthalic anhydride, tetrahydrophthalic anhydride, nadic anhydride, methylnadic anhydride, trialkyltetrahydrophthalic anhydride, hexahydrophthalic anhydride, methylhydrophthalic anhydride, 5-(2,5-dioxotetrahydrofuryl)-3-methyl-3-cyclohexene-1,2-dicarboxylic anhydride, trialkyltetrahydrophthalic anhydride-maleic acid adduct, dodecenylsuccinic anhydride, polyazelaic anhydride, polydodecanedioic anhydride, chlorendic anhydride, 3 or 4-methyl-1,2,3,6-tetrahydrophthalic anhydride, 3 or 4-methylhexahydrophthalic anhydride, and methyl-3,6-endomethylene-1,2,3,6-tetrahydrophthalic anhydride. These acid anhydrides are used as curing agents for an epoxy resin.

In the linear aliphatic group-containing organic substance used for the insulating material, the linear aliphatic group preferably has 10 or more carbon atoms, more preferably has 10 or more and 20 or less carbon atoms (synonymous to "carbon atoms of 10 to 20". Furthermore, the organic substance preferably has an amino group.

Examples of the organic substance include 1-aminodecane, 1-aminoundecane, 1-aminododecane, 1-aminotridecane, tetradecylamine, 1-aminopentadecane, hexadecylamine, 1-aminoheptadecane, octadecylamine, didecylamine, diundecylamine, didodecylamine, N,N-didodecylmethylamine, N-methyloctadecylamine, N,N-dimethyldecylamine, N,N-dimethyldodecylamine, N,N-dimethyltetradecylamine, N,N-dimethylhexadecylamine, N,N-dimethyloctadecylamine, tri-n-decylamine, tri-n-undecylamine, and tri-n-dodecylamine.

In addition, the inorganic filler is preferably used from viewpoints of improvement in heat resistance, reduction in thermal expansion coefficient, and the like. Examples of the inorganic filler include aluminum hydroxide, clay, talc, alumina, and glass powder. In the present invention, aluminum hydroxide or silica is preferably used, and silica is particularly preferably used. The inorganic filler preferably causes small separation/sedimentation, and preferably has a small increase in viscosity at the time of blending. For this purpose, the inorganic filler preferably has an average particle diameter of 1 to 50 µm.

The inorganic filler may be blended in the main agent, the curing agent, or both thereof. The blending amount of the inorganic filler is preferably 10 to 300 parts by mass with respect to 100 parts by mass of the total of the epoxy resin and the curing agent. When the blending amount is smaller than the above range, an effect of blending the inorganic filler is small. Meanwhile, when the blending amount is larger than the above range, an increase in viscosity is large, and handling after the main agent is mixed with the curing agent may be difficult.

In the present invention, in addition to the above materials, an antifoaming agent, a coupling agent, a reaction diluent, a thixotropic agent, a pigment, and the like can be used as required.

A layered silicate may be added as a part of the inorganic filler added to the insulating material according to the present invention. The layered silicate has a two-dimensional flat layer structure in which SiO₄ tetrahedrons are connected to each other while sharing three oxygen atoms, and is formed by laminating a plurality of such layer structures. A hydrogen atom is interposed between layers of the layered silicate, and a hydroxy group (OH group) is formed in many cases.

Examples of the layered silicate include mica such as white mica, bronze mica, black mica, brittle mica, chlorite, phlogopite, lepidolite, muscovite, biotite, paragonite, levitrite, margarite, or vermiculite, and a modified mineral thereof.

The average particle diameter of the layered silicate is preferably from 2 to 20 µm when the particle diameter is small, and 10 µm or more when the particle diameter is large. When the average particle diameter of the layered silicate is 2 µm or less, the viscosity increases as compared with the addition amount. Therefore, if it is attempted to obtain a sufficient insulation property, injection of the resin may be difficult. The content of the layered silicate in the resin composition of the present invention is 0.1 to 40% by mass, and preferably 0.5 to 20% by mass. When the content is less than 0.1% by mass, a sufficient effect of increasing insulation breakdown strength is not observed. When the content exceeds 40% by mass, the viscosity of the resin before curing is remarkably increased, and injection and molding may be difficult.

In the epoxy resin composition, in addition to the epoxy resin, the acid anhydride, the layered silicate, and the amine, a curing accelerator can be blended. Examples of the curing accelerator include an imidazole compound such as 2-ethyl 4-methylimidazole or 1-benzyl-2-ethylimidazole, diazabicycloundecene (DBU), and diazabicyclononene (DBN), but are not particularly limited thereto.

Furthermore, the insulating material of the present invention can also be used for insulation of an electric device having a coil. For example, by impregnating a coil of a motor with the insulating material, an insulation property can be improved.

### <Method for manufacturing ignition coil>

A method for manufacturing the ignition coil according to the present invention includes a step of preparing a resin composition and a curing treatment step of curing the resin composition.

A method for preparing a resin composition is not particularly limited, and an ordinary method is applied. For example, a main agent mainly containing an epoxy resin can be prepared by blending an epoxy resin, a layered silicate, an inorganic filler, another additive, and the like, and then subjecting these to stirring/mixing with a device such as a DC motor, a grinding machine, a disperser, or a rotating/revolving mixer. Similarly, the curing agent mainly containing an acid anhydride can be prepared by subjecting an acid anhydride as a curing agent for an epoxy resin, an inorganic filler, another additive, and the like to stirring/mixing. Stirring/mixing is not particularly limited as long as being able to disperse materials added to the epoxy resin sufficiently.

In the resin composition preparing step, the epoxy resin, the acid anhydride, the inorganic filler, another additive, and the like are preferably subjected to stirring/mixing while being subjected to vacuum defoaming.

The curing treatment step injects a resin composition into a coil case and then heats the resin composition. The resin composition according to the present invention can be cured by heating. In the curing treatment step, the resin composition may be injected into a previously heated coil case and then heated. The curing temperature is preferably 140°C or higher, and more preferably 180°C or higher from a viewpoint of thermal motion of an alkyl group, but this does not apply to a case where the heat resistant temperature of the coil case or the like is lower than these temperatures.

Examples of the present invention will be described below, but the present invention is not limited to these Examples.

In each Example, a specific method for manufacturing an ignition coil will be described.

### [Example 1]

To 100 parts by mass of a bisphenol A type epoxy resin (JER 828, manufactured by Mitsubishi Chemical Corporation), 10 parts by mass of N,N-dimethyloctadecylamine (manufactured by Tokyo Chemical Industry Co., Ltd.) was added. Thereafter, 110 parts by mass of methyl-3,6-endomethylene-1,2,3,6-tetrahydrophthalic anhydride (MHAC-P, manufactured by Hitachi Chemical Co., Ltd.), 1.7 parts by mass of a curing accelerator (DBU, manufactured by SAN-APRO Co., Ltd.), and 5 parts by mass of synthetic mica (Micro Mica KM, average particle diameter 16.2 to 21.6 µm, aspect ratio 130 to 210, manufactured by Co-op Chemical Co., Ltd.) were added thereto. Thereafter, stirring/mixing and vacuum defoaming were performed to prepare a resin composition.

This resin composition was injected into a coil case previously heated to 60°C, vacuum defoaming was performed, and then a curing treatment was performed at 140°C for 5 hours to obtain an ignition coil.

### [Example 2]

To 100 parts by mass of a bisphenol A type epoxy resin (JER 828, manufactured by Mitsubishi Chemical Corporation), 10 parts by mass of N,N-dimethyloctadecylamine (manufactured by Tokyo Chemical Industry Co., Ltd.) was added. Thereafter, 110 parts by mass of methyl-3,6-endomethylene-1,2,3,6-tetrahydrophthalic anhydride (MHAC-P, manufactured by Hitachi Chemical Co., Ltd.), 1.7 parts by mass of a curing accelerator (DBU, manufactured by SAN-APRO Co., Ltd.), 1 part by mass of natural mica (Y-1800, average particle diameter 10 µm, aspect ratio 70, manufactured by Yamaguchi Mica Co., Ltd.), and 4 parts by mass of natural mica (Y-3000, average particle diameter 23 µm, aspect ratio 70, manufactured by Natural Mica Co., Ltd.) were added thereto. Thereafter, stirring/mixing and vacuum defoaming were performed to prepare a resin composition.

This resin composition was injected into a coil case previously heated to 60°C, vacuum defoaming was performed, and then a curing treatment was performed at 140°C for 5 hours to obtain an ignition coil.

### [Example 3]

To 100 parts by mass of a bisphenol A type epoxy resin (JER 828, manufactured by Mitsubishi Chemical Corporation), 10 parts by mass of N-methylstearylamine (manufactured by Tokyo Chemical Industry Co., Ltd.) was added. Thereafter, 130 parts by mass of methyl-3,6-endomethylene-1,2,3,6-tetrahydrophthalic anhydride (MHAC-P, manufactured by Hitachi Chemical Co., Ltd.), 1.7 parts by mass of a curing accelerator (DBU, manufactured by SAN-APRO Co., Ltd.), 1 part by mass of natural mica (Y-1800, average particle diameter 10 µm, aspect ratio 70, manufactured by Yamaguchi Mica Co., Ltd.), and 4 parts by mass of natural mica (Y-3000, average particle diameter 23 µm, aspect ratio 70, manufactured by Natural Mica Co., Ltd.) were added thereto. Thereafter, stirring/mixing and vacuum defoaming were performed to prepare a resin composition.

This resin composition was injected into a coil case previously heated to 60°C, vacuum defoaming was performed, and then a curing treatment was performed at 140°C for 5 hours to obtain an ignition coil.

### [Example 4]

To 100 parts by mass of a bisphenol A type epoxy resin (JER 828, manufactured by Mitsubishi Chemical Corporation), 10 parts by mass of N,N-dimethyloctadecylamine (manufactured by Tokyo Chemical Industry Co., Ltd.) was added. Thereafter, 110 parts by mass of methyl-3,6-endomethylene-1,2,3,6-tetrahydrophthalic anhydride (MHAC-P, manufactured by Hitachi Chemical Co., Ltd.), 1.7 parts by mass of a curing accelerator (DBU, manufactured by SAN-APRO Co., Ltd.), 1 part by mass of natural mica (Y-1800, average particle diameter 10 µm, aspect ratio 70, manufactured by Yamaguchi Mica Co., Ltd.), and 4 parts by mass of natural mica (Y-3000, average particle diameter 23 µm, aspect ratio 70, manufactured by Natural Mica Co., Ltd.) were added thereto. Thereafter, stirring/mixing and vacuum defoaming were performed to prepare a resin composition.

This resin composition was injected into a coil case previously heated to 60°C, vacuum defoaming was performed, and then a curing treatment was performed at 140°C for 5 hours to obtain an ignition coil.

### [Example 5]

To 100 parts by mass of a bisphenol A type epoxy resin (JER 828, manufactured by Mitsubishi Chemical Corporation), 10 parts by mass of stearylamine (manufactured by Tokyo Chemical Industry Co., Ltd.) was added. Thereafter, 180 parts by mass of methyl-3,6-endomethylene-1,2,3,6-tetrahydrophthalic anhydride (MHAC-P, manufactured by Hitachi Chemical Co., Ltd.), 1.7 parts by mass of a curing accelerator (DBU, manufactured by SAN-APRO Co., Ltd.), 1 part by mass of natural mica (Y-1800, average particle diameter 10 µm, aspect ratio 70, manufactured by Yamaguchi Mica Co., Ltd.), and 4 parts by mass of natural mica (Y-3000, average particle diameter 23 µm, aspect ratio 70, manufactured by Natural Mica Co., Ltd.) were added thereto. Thereafter, stirring/mixing and vacuum defoaming were performed to prepare a resin composition.

This resin composition was injected into a coil case previously heated to 60°C, vacuum defoaming was performed, and then a curing treatment was performed at 140°C for 5 hours to obtain an ignition coil.

### [Example 6]

To 100 parts by mass of a bisphenol A type epoxy resin (JER 828, manufactured by Mitsubishi Chemical Corporation), 10 parts by mass of N-methylstearylamine (manufactured by Tokyo Chemical Industry Co., Ltd.) was added. Thereafter, 130 parts by mass of methyl-3,6-endomethylene-1,2,3,6-tetrahydrophthalic anhydride (MHAC-P, manufactured by Hitachi Chemical Co., Ltd.), 1.7 parts by mass of a curing accelerator (DBU, manufactured by SAN-APRO Co., Ltd.), 1 part by mass of synthetic mica (ME-100, average particle diameter 5.6 to 7.6 µm, aspect ratio 56 to 76, manufactured by Co-op Chemical Co., Ltd.), and 4 parts by mass of synthetic mica (Micro Mica KM, average particle diameter 16.2 to 21.6 µm, aspect ratio 130 to 210, manufactured by Co-op Chemical Co., Ltd.) were added thereto. Thereafter, stirring/mixing and vacuum defoaming were performed to prepare a resin composition.

This resin composition was injected into a coil case previously heated to 60°C, vacuum defoaming was performed, and then a curing treatment was performed at 140°C for 5 hours to obtain an ignition coil.

### [Example 7]

To 100 parts by mass of a bisphenol A type epoxy resin (JER 828, manufactured by Mitsubishi Chemical Corporation), 10 parts by mass of N,N-dimethyloctadecylamine (manufactured by Tokyo Chemical Industry Co., Ltd.) was added. Thereafter, 110 parts by mass of methyl-3,6-endomethylene-1,2,3,6-tetrahydrophthalic anhydride (MHAC-P, manufactured by Hitachi Chemical Co., Ltd.), 1.7 parts by mass of a curing accelerator (DBU, manufactured by SAN-APRO Co., Ltd.), 1 part by mass of synthetic mica (ME-100, average particle diameter 5.6 to 7.6 µm, aspect ratio 56 to 76, manufactured by Co-op Chemical Co., Ltd.), and 4 parts by mass of synthetic mica (Micro Mica KM, average particle diameter 16.2 to 21.6 µm, aspect ratio 130 to 210, manufactured by Co-op Chemical Co., Ltd.) were added thereto. Thereafter, stirring/mixing and vacuum defoaming were performed to prepare a resin composition.

This resin composition was injected into a coil case previously heated to 60°C, vacuum defoaming was performed, and then a curing treatment was performed at 140°C for 5 hours to obtain an ignition coil.

### (Comparative Example 1)

Using synthetic mica (ME-100, average particle diameter 5.6 to 7.6 µm, aspect ratio 56 to 76, manufactured by Co-op Chemical Co., Ltd.) as a layered silicate, 100 parts by mass of a bisphenol A type epoxy resin (JER 828, manufactured by Mitsubishi Chemical Corporation), 100 parts by mass of an acid anhydride (MHAC-P, manufactured by Hitachi Chemical Co., Ltd.), and 1.7 parts by mass of a curing accelerator (DBU, manufactured by Sunapro Co., Ltd.) were added. Thereafter, stirring/mixing and vacuum defoaming were performed to prepare a resin composition.

This resin composition was injected into a coil case previously heated to 60°C, vacuum defoaming was performed, and then a curing treatment was performed at 140°C for 5 hours to obtain an ignition coil.

### <Voltage durability evaluation test>

For the ignition coils manufactured in Examples 1 to 7 and Comparative Example 1, a voltage durability evaluation test at 40 kV was performed. A voltage of 12 V was continuously applied to the ignition coil, and the number of ignitions before insulation breakdown occurred was measured.

Table 1 indicates results of the voltage durability evaluation test.

**[Table 1]**

| | Number (times) of ignitions before insulation breakdown occurs |
|---|---|
| Example 1 | 6 × 109 |
| Example 2 | 8 × 109 |
| Example 3 | 6 × 10⁹ |
| Example 4 | 1 × 10¹⁰ |
| Example 5 | 2 × 10¹⁰ |
| Example 6 | 1 × 10¹⁰ |
| Example 7 | 1 × 10¹⁰ |
| Example 8 | 2 × 10¹⁰ |
| Example 9 | 1 × 10¹⁰ |
| Example 10 | 5 × 10⁹ |
| Comparative Example 1 | 2 × 10⁹ |

Table 1 indicates that insulation breakdown time becomes long by using an insulating material formed by curing an epoxy resin composition in which an acid anhydride is added in an excessively large amount with respect to 1 equivalent of an epoxy group of an epoxy resin.

## Claims

1. An ignition coil (1) for an internal combustion engine, comprising:
an iron core;
a primary coil (3) disposed around the iron core;
a secondary coil (5) disposed around the primary coil (3); and
an insulating portion (10) sealing the iron core, the primary coil (3), and the secondary coil (5), wherein
the insulating portion (10) includes a resin and a linear aliphatic group-containing organic substance (11), and has a sea-island structure in which the organic substance (11) is dispersed in a matrix of the resin.

2. The ignition coil (1) for an internal combustion engine according to claim 1, wherein
the insulating portion (10) contains amine.

3. The ignition coil (1) for an internal combustion engine according to claim 2, wherein
the organic substance (11) has an amino group.

4. An ignition coil (1) for an internal combustion engine according to claim 1, wherein
the insulating portion (10) contains an inorganic filler (15).

5. The ignition coil (1) for an internal combustion engine according to claim 4, wherein
the inorganic filler (15) contains aluminum hydroxide or silica.

6. The ignition coil (1) for an internal combustion engine according to claim 4, wherein
the inorganic filler (15) contains a layered silicate.

7. The ignition coil (1) for an internal combustion engine according to claim 1, wherein
the linear aliphatic group of the organic substance (11) has 10 or more and 20 or less carbon atoms.

8. The ignition coil (1) for an internal combustion engine according to claim 1, wherein
the organic substance (11) has a particle diameter of 5 to 100 nm.
